# EUROPÄISCHE PATENTSCHRIFT

(11) **EP 1 448 944 B1**
(45) Veröffentlichungstag und Bekanntmachung des Hinweises auf die Patenterteilung: **13.04.2005**
(21) Anmeldenummer: 02790426.7
(22) Anmeldetag: 23.11.2002
(51) Int. Cl.: F27D 1/04, C03B 5/237

(54) **FEUERFESTER KERAMISCHER GITTERSTEIN**
REFRACTORY CERAMIC CHECKER BRICK
BRIQUE CERAMIQUE REFRACTAIRE PERFOREE

(30) Priorität: 28.11.2001 DE 10158193
(43) Veröffentlichungstag der Anmeldung: 25.08.2004
(73) Patentinhaber: Refractory Intellectual Property GmbH & Co. KG, 1100 Wien (AT)
(72) Erfinder: BALD, Stefan, 65232 Taunusstein (DE)
(74) Vertreter: Becker, Thomas, Dr., Dipl.-Ing.
(86) Internationale Anmeldenummer: PCT/EP2002/013189
(87) Internationale Veröffentlichungsnummer: WO 2003/046455

(56) Entgegenhaltungen:
- DE-C- 19 808 810
- GB-A- 2 122 328
- US-A- 4 436 144
- US-A- 5 634 313
- HOFMANN O R: "NEUE REGENERATORSTEINE UND EINE VERSUCHSAPPARATUR ZUR MESSUNG IHRES WARMEUBERTRAGUNGSVERHALTENS" SILIKATTECHNIK, VEB VERLAG FUER BAUWESEN. BERLIN, DE, Bd. 42, Nr. 3, 1991, Seiten 88-91, XP000145593

## Beschreibung

Die Erfindung betrifft einen feuerfesten keramischen Gitterstein, wie er zum Beispiel für den Gitterbesatz von Kammern eines Glasschmelzofens eingesetzt wird.

Bekannte prismatische feuerfeste Hohlsteine der gattungsgemäßen Art beschreibt die AT 406 197 B, die den derzeitigen Entwicklungsstand der Gittersteine ebenso offenbart wie frühere Ausführungsformen.

Hohlsteine der genannten Art, die auch als Topfsteine oder Topflochsteine bezeichnet werden, haben sich bewährt und werden in großem Umfang eingesetzt. Der symmetrische Aufbau der Topfsteine ermöglicht es, die Steine benachbarter Besatzebenen versetzt zueinander anzuordnen. Auf diese Weise wird ein gleichmäßiger Aufbau der Gitterung und eine hohe Stabilität erreicht.

An den Wänden der Gittersteine kommt es im Laufe der Zeit zu Anlagerungen (Anbackungen) von Fremdpartikeln, die über das Abgas beim Aufheizen der Gitterung eingebracht werden. Dies macht eine mehr oder weniger regelmäßige Reinigung notwendig.

Bei dem beschriebenen Aufbau einer Gitterung aus konventionellen Topfsteinen ist eine solche Reinigung nur schwer möglich.

Bei einer sogenannten Rostpackung, bei der quaderförmige Vollsteine in benachbarten Ebenen um jeweils 90° versetzt zueinander angeordnet werden, ergeben sich ohne weiteres innerhalb einer "Besatz-Ebene" durchlaufende (horizontale) Durchgänge, die eine Reinigung ermöglichen. Nachteilig bei einer solcher Rostpackung ist jedoch der relativ geringe wärmetechnische Wirkungsgrad sowie die geringe mechanische Stabilität einer solchen Gitterung.

Mit der Erfindung wird eine Symbiose der genannten wärmetechnischen und mechanischen Parameter angestrebt, das heißt, es soll eine Möglichkeit zur Gestaltung einer Gitterung aufgezeigt werden, wie bei hoher mechanischer Stabilität ein hoher wärmetechnischer Wirkungsgrad sowie die genannte Reinigungsmöglichkeit erreichbar sind.

Dabei geht die Erfindung von einem konventionellen Topfstein aus, wie er beispielsweise in der DE 29 34 208 C2 oder der AT 406 197 B beschrieben ist. Ein solcher Topfstein ist bezüglich seiner Mittenlängsachse im wesentlichen rotationssymmetrisch (nach Drehung um 90° ergibt sich jeweils die gleiche Geometrie). Ein solcher Stein wird nun hinsichtlich seiner Geometrie insoweit abgewandelt, als er nunmehr größere Wandabschnitte (Wandflächen mit größeren Oberflächen gegenüber dem Stand der Technik) aufweisen soll. Diese größeren Wandabschnitte können mit mehreren und/oder größeren Ausnehmungen ausgebildet werden, um den Wirkungsgrad zu verbessern und/oder Reinigungsgeräte zuzuführen.

Eine einfache dimensionsmäßige Vergrößerung der bekannten Topfsteine führt nicht zu dem gewünschten Ziel, weil der grundsätzliche Gitteraufbau unverändert bleiben würde. Außerdem würde sich der wärmetechnische Wirkungsgrad verschlechtern.

Der erfindungsgemäße Vorschlag geht dahin, den Topfstein mit einer im wesentlichen rechteckigen Grundfläche (anstelle der bisher im wesentlichen quadratischen Grundfläche) auszubilden. Die Geometrie des Hohlsteins soll so sein, dass Steine innerhalb einer Besatzebene und in unterschiedlichen Besatzebenen regelmäßig (statistisch) kombinierbar in dem Sinne sind, um einen gleichmäßigen Besatzaufbau beziehungsweise eine gleichmäßige Besatzdichte zu erreichen.

Eine Möglichkeit dazu besteht darin, die Länge des Steins so zu wählen, dass sie der doppelten Breite des Steins, abzüglich einer Wandstärke, entspricht. Ein solcher Stein wird in der nachfolgenden Figurenbeschreibung dargestellt und erläutert.

Eine andere Darstellung der Geometrie des Steins ist folgende: Bei sogenannter "geschlossener Setzweise" der Steine in einer (Regenerator)Gitterung beträgt der Abstand der Mittenlängsachsen benachbarter Steine in Längsrichtung ein geradzahlig Vielfaches des Abstandes der Mittenlängsachsen benachbarter Steine in Querrichtung (senkrecht zur Längrichtung). Bei dieser Setzweise liegt ein Stein einer Ebene stets auf einem Wandabschnitt eines Steins in der Ebene darunter auf, wie ebenfalls in der Figurenbeschreibung noch näher erläutert wird.

Die Gittersteine lassen sich innerhalb einer Besatzebene nebeneinander und senkrecht zueinander anordnen. Entsprechendes gilt bezüglich der Anordnung in einer vertikal benachbarten Besatzebene, so dass sich insgesamt wiederum ein dreidimensionaler Besatzaufbau ähnlich dem aus konventionellen Topfsteinen erstellen lässt.

Ein weiterer Vorteil besteht darin, dass die so dimensionierten Gittersteine mit konventionellen Topfsteinen innerhalb einer Gitterebene kombiniert werden können, wozu im Weiteren auf die Figurenbeschreibung hingewiesen wird.

Danach betrifft die Erfindung in ihrer allgemeinsten Ausführungsform einen feuerfesten keramischen Gitterstein mit folgenden Merkmalen:
- acht, im Winkel < 90° aneinander anschließenden Wandabschnitten,
- die Wandabschnitte begrenzen umfangsseitig einen an gegenüberliegenden Enden offenen Raum,
- die Wandabschnitte bilden eine obere und untere, jeweils gemeinsame Setzfläche,
- der Gitterstein weist eine Länge auf, die einem ganzzahligen Vielfachen seiner Breite, abzüglich einer Wandstärke, entspricht,
- der Gitterstein ist symmetrisch zu einer Spiegelebene gestaltet, die den Gitterstein in Längsrichtung teilt.

Der Gitterstein weist, wie ein konventioneller Topfstein, eine Ringform auf, wobei die Querschnittsfläche des von den Wandabschnitten umschlossenen Raums nunmehr jedoch im wesentlichen rechteckig (unter Einschluss der abgewinkelten Eckbereiche: achteckig) ist. Das Abgas (beim Beheizen eines zugehörigen Regenerators) beziehungsweise die Luft (zur anschließenden Wärmeaufnahme) strömt durch die entsprechenden Hohlräume in Vertikalrichtung, aber auch (in horizontaler Richtung) durch die in einzelnen Wandabschnitten ausgebildeten Öffnungen.

Aufgrund der langgestreckten Bauform können in den großen (gegenüberliegenden) Seitenflächen des Gittersteins Ausnehmungen (Öffnungen) mit großer Querschnittsfläche ausgebildet werden, gegebenenfalls auch mehrere Ausnehmungen nebeneinander.

Nach einer Ausführungsform beträgt die Querschnittsfläche der Ausnehmung(en) mindestens 15% der gesamten Querschnittsfläche des zugehörigen Wandabschnitts. Sie kann ohne weiteres auch > 30, > 35, > 40, > 45, > 50, ja sogar > 60 oder > 70 % der gesamten Querschnittsfläche des zugehörigen Wandabschnitts ausmachen.

Dabei kann die Ausnehmung nach Art einer Bohrung gestaltet sein. Sie kann aber auch zu einer Setzfläche des Gittersteins offen, also "torförmig" gestaltet sein.

Die große Querschnittsfläche der Ausnehmung bei einem erfindungsgemäßen Gitterstein schafft folgende Vorteile gegenüber dem eingangs genannten Stand der Technik:
- Es wird die Möglichkeit geschaffen, beispielsweise mit Lanzen oder Stangen die Gitterung horizontal zu reinigen.
- Durch eine Verkleinerung des Masseanteils des Gittersteins wird auch die Fläche reduziert, an der sich mögliche Fremdpartikel anlagern können.
- Die vergrößerten Öffnungen schaffen eine erhöhte Turbulenz der durchgeführten Luft/Gase und erhöhen damit den Wärmeübergang zu den Wänden.
- Insgesamt weist der Gitterstein ein geringeres spezifisches Gewicht (kg/m³) auf.
- Dadurch, dass die Länge und Breite des Gittersteins im Sinne eines Besatzaufbaus mit gleichmäßiger Verteilung aufeinander abgestimmt sind, kann der Stein auch mit "Teilformatsteinen", wie "Halbformatsteinen" oder "Drittelformatsteinen" kombiniert werden, wie in den nachfolgenden Figuren dargestellt.

Die Geometrie der Ausnehmung (Öffnung) ist prinzipiell beliebig. Nach einer Ausführungsform weist mindestens eine Ausnehmung in Längsrichtung des Gittersteins eine Größe auf, die mindestens 50, 60 oder 70% der Länge der zugehörigen Wandfläche entspricht.

Auch die senkrecht zu den in Längsrichtung verlaufenden Wandabschnitten verlaufenden Wandabschnitte, also die kürzeren Wandabschnitte, können mit Ausnehmungen ausgebildet sein.

Bei einem Gitterstein, dessen Länge etwa dem Doppelten der Breite entspricht, bietet es sich an, die Querschnittsfläche der Ausnehmungen in den in Längsrichtung verlaufenden Wandabschnitten etwa doppelt so groß zu wählen wie die Querschnittsfläche der Ausnehmungen in den Wandabschnitten senkrecht dazu (in Richtung der Breite des Steins), in jedem Fall größer.

Die beschriebene geometrische Gestaltung des Steins ermöglicht es, den in der AT 406 197 B formulierten Erfindungsgedanken zu übernehmen, nämlich die Wandabschnitte, die zwischen den Wandabschnitten verlaufen, die in Längsrichtung des Gittersteins und senkrecht dazu ausgerichtet sind, mit einer geringeren Wandstärke auszubilden. Dies schafft die Möglichkeit, im Verbund auch zwischen benachbarten Gittersteinen einer Besatzebene "Spalten" (Hohlräume) zu schaffen, die wärmetechnisch nutzbar sind, indem Abgas/Luft auch hier hindurchgeleitet werden kann.

Die entsprechenden Wandabschnitte können beispielsweise eine um 15 bis 35 % geringere Wandstärke im Vergleich mit den übrigen Wandabschnitten aufweisen.

Zum Aufbau einer kompletten Gitterung bietet es sich an, entlang der Setzflächen der Steine Erhebungen und/oder Vertiefungen nach Art eines Nut-/Feder-Systems auszubilden, um in Vertikalrichtung aufeinander gestapelte Steine mechanisch sicher gegeneinander fixieren zu können. Bezüglich konkreter Gestaltungsmöglichkeiten kann dabei auf den eingangs genannten Stand der Technik verwiesen werden, der bezüglich dieser Merkmale hier analog adaptierbar ist.

Die neuen Gittersteine lassen sich problemlos mit bekannten Gittersteinen kombinieren. So kann mindestens eine Besatzebene mit den beschriebenen großen Gittersteinen gestaltet werden. Wird eine Besatzebene darüber aus konventionellen (kleineren) Gittersteinen aufgebaut, kann dies zu einer punktförmigen Belastung (in den Eckbereichen) auf die Wandabschnitte der darunter liegenden (größeren) Gittersteine führen.

Es wird deshalb vorgeschlagen, diese Gittersteine so zu gestalten, dass die in Längsrichtung verlaufenden Wandabschnitte ein größeres (beispielsweise: > 50 % größeres) Flächenmoment (I = (b · h)³/12 mit b= Breite, h = Höhe für Rechteckquerschnitt) aufweisen als die weiteren Wandabschnitte, insbesondere die Wandabschnitte, die die Schmalseiten des Steins bilden. Folgende Maßnahmen sind möglich:
- Verbreiterung der Wanddicke
- Verzicht auf Ausnehmungen (Öffnungen) oder Reduzierung ihrer Querschnittsfläche
- Anordnung der Ausnehmung(en) so, dass in vertikaler Verlängerung der zu erwartenden Punktlast der Wandabschnitt frei von Ausnehmungen ist.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert. Die Figurenbeschreibung enthält Merkmale, die auch für sich und in beliebigen Kombinationen untereinander für die Erfindung genutzt werden können.

Dabei zeigen - jeweils in schematischer Darstellung -
- Figur 1a:: einen Gitterstein in einer Aufsicht,
- Figur 1b:: den Gitterstein nach Figur 1a in einer Seitenansicht,
- Figur 1c:: den Gitterstein nach Figur 1a in einer weiteren Seitenansicht,
- Figur 1d:: den Gitterstein nach Figur 1a in einer perspektivischen Ansicht,
- Figur 2:: eine perspektivische Teilansicht einer Gitterung mit Gittersteinen nach den Figuren 1a-d,
- Figur 3:: eine Aufsicht auf eine Besatzebene aus Gittersteinen nach den Figuren 1a-d
- Figur 4:: eine Aufsicht auf einen mehretagigen Gitterungsaufbau aus unterschiedlichen Hohlsteinen
- Figur 5:: eine perspektivische Teilansicht eines alternativen Aufbaus einer Gitterung.

In den Figuren sind gleiche oder gleichwirkende Bauteile mit gleichen Bezugsziffern dargestellt.

Der Gitterstein nach den Figuren 1a, b ist wie folgt aufgebaut:
Er besteht aus insgesamt acht Wandabschnitten 10.1, 10.2 bis 10.8. Die Wandabschnitte liegen jeweils paarweise parallel gegenüber. Die Wandabschnitte 10.1, 10.5 verlaufen in Längsrichtung L. Die Wandabschnitte 10.3, 10.7 verlaufen senkrecht zur Längsrichtung L, also in "Querrichtung" Q. Die weiteren Wandabschnitte 10.2, 10.4, 10.6 und 10.8 verbinden die zuvor beschriebenen Wandbereiche 10.1, 10.3, 10.5 und 10.7, und zwar hier jeweils derart, dass aneinander anschließende Wandabschnitte wie 10.1, 10.2 oder 10.5, 10.6 unter einem Winkel von 45° zueinander verlaufen.

Insgesamt ergibt sich damit eine achteckige Grundfläche, einschließlich des von den Wandflächen 10.1, 10.2 bis 10.8 umschlossenen Raums 12 mit ebenfalls achteckiger horizontaler Querschnittsfläche. Der Raum 12 ist oben und unten (in Richtung der Mittenlängsachse MLA des Steins) offen.

Die Länge 1 des Steins (hier: 398mm) entspricht dem Doppelten der Breite b (hier: 2 x 218 mm) abzüglich der einfachen Wandstärke (hier: 38 mm) einer der Wände 10.1, 10.5, die in Längsrichtung L verlaufen.

Bei "geschlossener Setzweise" entspricht der Abstand der Mittenlängsachsen MLA zweier in Längsrichtung aneinander anschließender Steine dem 2-fachen des Abstandes der Mittenlängsachsen MLA zweier in Querrichtung aneinander anschließender Steine.

In den großen Wandabschnitten 10.1, 10.5 sind korrespondierende Ausnehmungen 14 vorgesehen, die zur unteren Setzfläche 16 offen sind und in der Seitenansicht (Figur 1b) eine Torform besitzen.

Im dargestellten Ausführungsbeispiel ist die Querschnittsfläche der Ausnehmung 14 nur geringfügig kleiner als die Querschnittsfläche des verbleibenden Wandabschnitts 10.5. Anders ausgedrückt: die Querschnittsfläche der Ausnehmung 14 beträgt etwa 40 % der theoretischen Gesamtfläche des Wandabschnitts 10.5.

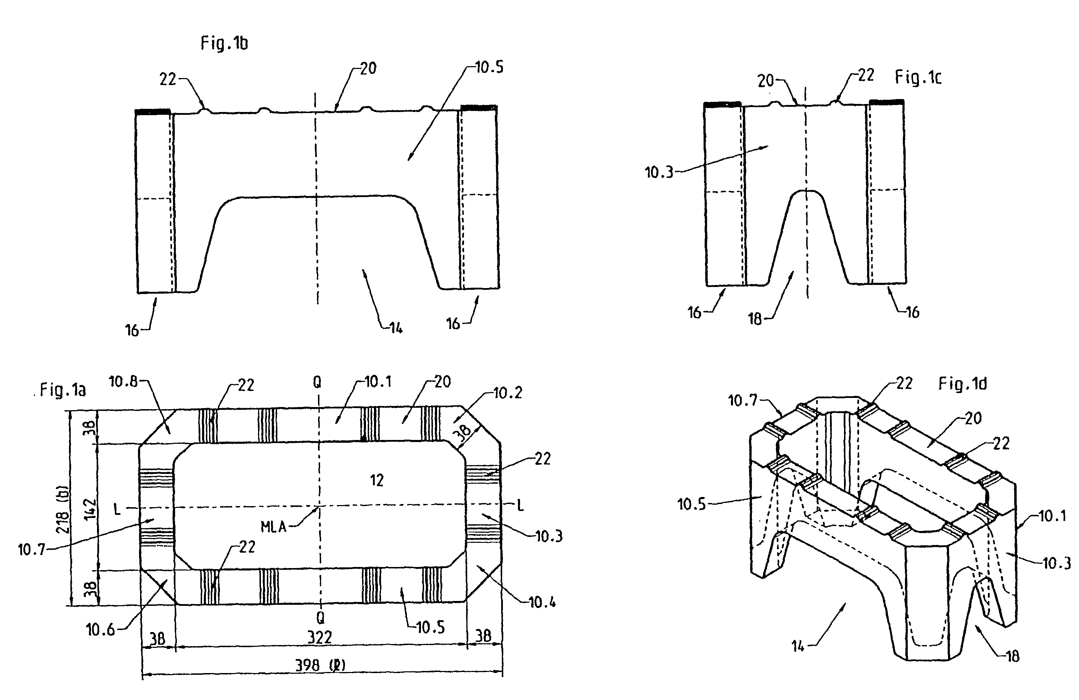

Wie sich aus Figur 1c ergibt, weisen auch die schmalen Wandabschnitte 10.3, 10.7 Ausnehmungen 18 auf, jedoch mit entsprechend kleinerer Querschnittsfläche gegenüber den Ausnehmungen 14 (hier etwa 25%).

Während auf den Setzflächen 16 der Wandteile 10.1, 10.5 beabstandet zueinander Vertiefungen angeordnet sind, die senkrecht zur Längsrichtung L verlaufen, sind auf der unteren Setzfläche 16 der Wandabschnitte 10.3, 10.7 Vertiefungen in Längsrichtung L vorgesehen. In den oberen Setzflächen 20 der genannten Wandteile 10.1, 10.3, 10.5 und 10.7 sind korrespondierende Erhebungen 22 angeordnet, wobei die Vertiefungen und Erhebungen 22 so aufeinander abgestimmt sind, dass sich beim Aufeinanderstapeln der Gittersteine ein Formschluss ergibt.

Der Stein ist bezüglich der durch die Linie Q - Q vorgegebenen Ebene parallel zur Mittenlängsachse MLA spiegelbildlich gestaltet.

Gittersteine der dargestellten Art lassen sich aus beliebigen feuerfesten Werkstoffen (Materialien) herstellen, je nach Anwendungsbereich. Insoweit ergeben sich keine Unterschiede gegenüber konventionellen Topfsteinen.

Dies gilt auch bezüglich des Verfahrens zur Herstellung der Gittersteine.

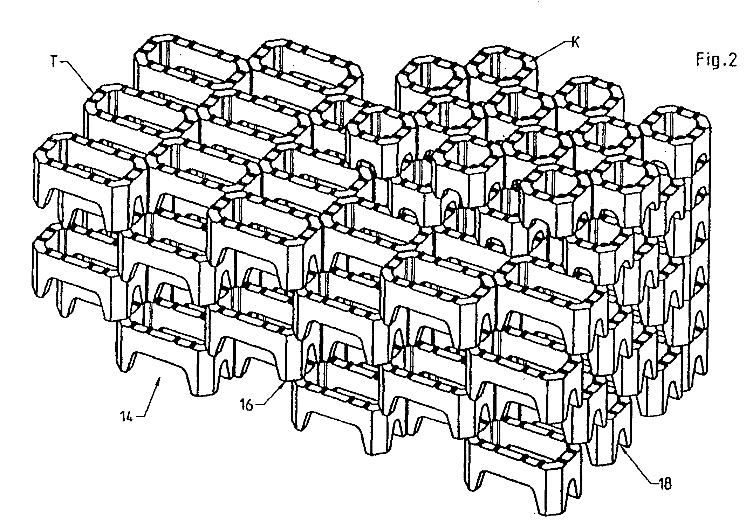

Figur 2 zeigt eine beispielhafte Gitterung aus erfindungsgemäßen Steinen T in Kombination mit konventionellen Topfsteinen K.

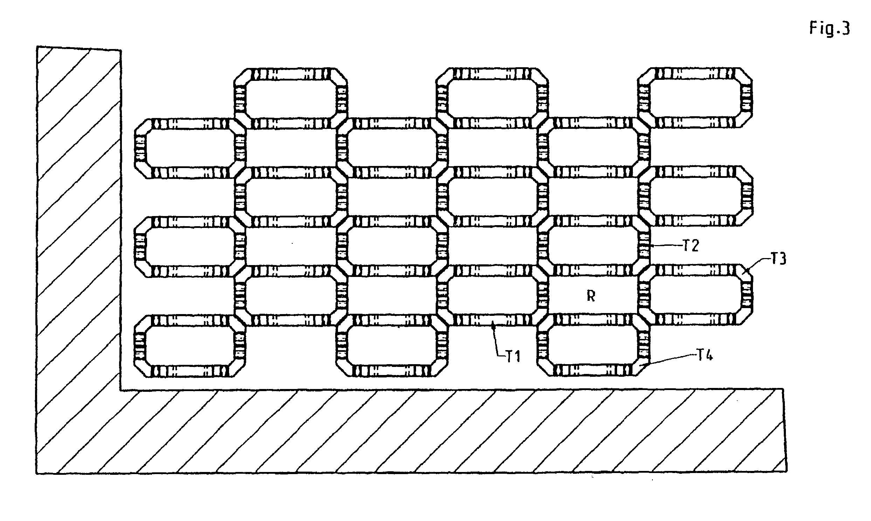

Aus Figur 3 ergibt sich der grundsätzliche Aufbau einer Besatzebene aus erfindungsgemäßen Steinen T, die versetzt zueinander "in Zeilen und Spalten" angeordnet werden, um eine gleichmäßige Besatzdichte zu erzielen. Benachbarte Steine T innerhalb einer Ebene grenzen dabei entlang der abgewinkelten Eckbereiche 10.2, 10.4, 10.6 oder 10.8 aneinander an. Vier, jeweils aneinander angrenzende Steine (in Figur 3: T1, T2, T3, T4) schließen einen Raum R ein, dessen Querschnittsfläche etwa der Querschnittsfläche des Raumes 12 jedes Steins T entspricht.

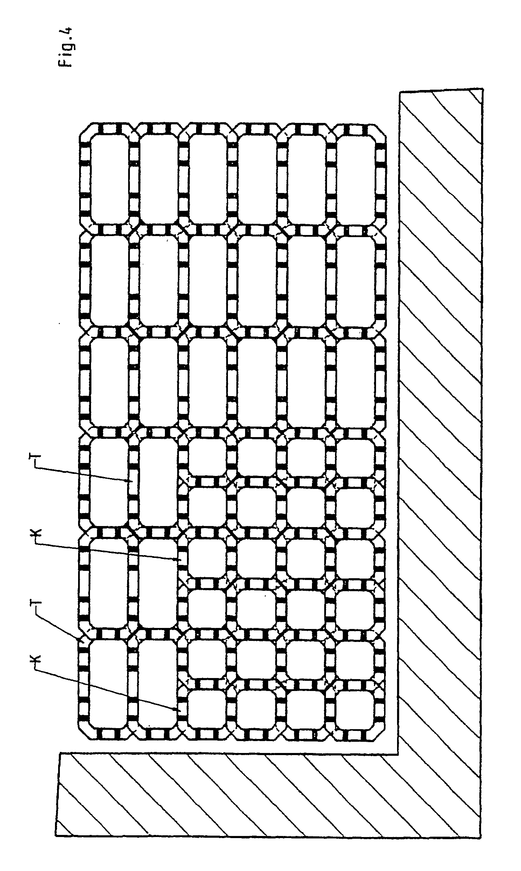

Figur 4 zeigt einen Aufbau analog dem nach Figur 3, jedoch mit Steinen in unterschiedlichen Besatzebenen, wobei sich zwei benachbarte Steine jeweils in einem Wandabschnitt überdecken, wie dies auch aus Figur 2 erkennbar ist.

In einem Teilbereich der in Figur 4 dargestellten Gitterung (ebenso in Figur 2) sind die erfindungsgemäßen Steine durch konventionelle Topfsteine der Bauart gemäß DE 29 34 208 C2 beziehungsweise AT 406 197 B ersetzt, wobei aufgrund der erfindungsgemäßen Geometrie der Gittersteine diese kleineren Formate problemlos auf die größeren Formate aufgesetzt werden können. Ebenso lassen sich wiederum auf konventionelle Topfsteine erfindungsgemäße Gittersteine in einer darüber liegenden Ebene setzen.

Insbesondere den Darstellungen nach den Figuren 1b, d und 2 kann entnommen werden, dass die beschriebene Steingeometrie auch bei einer geschlossenen Setzweise eine horizontale Reinigungsmöglichkeit entlang der durch die Öffnungen 14 gebildeten Kanäle schafft.

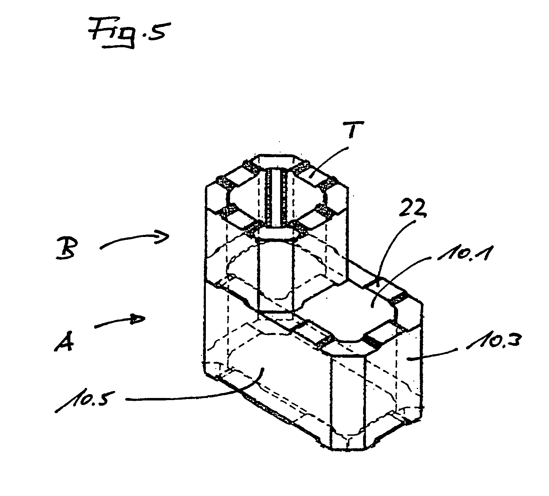

In Figur 5 ist schematisch folgender Gitterungsaufbau dargestellt:
In einer Besatzebene A sind Gittersteine ähnlich Figuren 1a-d angeordnet, aber mit geschlossenen Wandabschnitten 10.1, 10.3, 10.5 und 10.7, zur Erhöhung des Flächenträgheitsmoments der Wandabschnitte.

In der Ebene B darüber liegen konventionelle Topfsteine T, die sich im Wesentlichen über ihre vier Ecken auf dem Gitterstein darunter abstützen. Durch die massiven Wände 10.1, 10.3, 10.5 und 10.7 ist dies möglich.

## Patentansprüche

1. Feuerfester keramischer Gitterstein mit folgenden Merkmalen:
1.1 acht, im Winkel < 90° aneinander anschließenden Wandabschnitten (10.1 bis 10.8),
1.2 die Wandabschnitte (10.1 bis 10.8) begrenzen umfangsseitig einen an gegenüberliegenden Enden offenen Raum (12),
1.3 die Wandabschnitte (10.1 bis 10.8) bilden eine obere und untere, jeweils gemeinsame Setzfläche (16, 20) aus,
1.4 der Gitterstein weist eine Länge (1) auf, die einem ganzzahligen Vielfachen seiner Breite (b) entspricht, abzüglich einer Wandstärke (10.1 bis 10.8),
1.5 der Gitterstein ist symmetrisch zu einer Spiegelebene gestaltetet, die den Gitterstein in Längsrichtung (L)teilt.

2. Gitterstein nach Anspruch 1, bei dem mindestens die in Längsrichtung (L) verlaufenden Wandabschnitte (10.1, 10.5) mit Ausnehmungen (14) ausgebildet sind.

3. Gitterstein nach Anspruch 2,bei dem die Querschnittsfläche einer Ausnehmung (14) mindestens 15% der gesamten Querschnittsfläche des zugehörigen Wandabschnitts (10.1, 10.5) beträgt.

4. Gitterstein nach Anspruch 2, bei dem mindestens eine Ausnehmung (14) in Längsrichtung des Gittersteins eine Größe aufweist, die mindestens 50% der Länge der zugehörigen Wandfläche entspricht.

5. Gitterstein nach Anspruch 2, bei dem mindestens ein in Längsrichtung (L) verlaufender Wandabschnitt (10.1, 10.5) mehrere Ausnehmungen (14) im Abstand zueinander aufweist.

6. Gitterstein nach Anspruch 1, bei dem mindestens ein senkrecht zu den in Längsrichtung (L) verlaufenden Wandabschnitten (10.1, 10.5) verlaufender Wandabschnitt (10.3, 10.7) mit Ausnehmungen (18) ausgebildet ist.

7. Gitterstein nach Anspruch 2, bei dem die Querschnittsfläche der Ausnehmungen (14) in den in Längsrichtung verlaufenden Wandabschnitten (10.1, 10.5) mindestens doppelt so groß ist wie die Querschnittsfläche der Ausnehmungen (18) in den Wandabschnitten (10.3, 10.7) senkrecht dazu.

8. Gitterstein nach Anspruch 2 oder 6, bei dem die Ausnehmungen (14, 18) zu einer Setzfläche (16) des Gittersteins offen sind.

9. Gitterstein nach Anspruch 1, bei dem die Wandabschnitte (10.2, 10.4, 10.6, 10.8), die zwischen den Wandabschnitten (10.1, 10.3, 10.5, 10.7) verlaufen, die in Längsrichtung (L) des Gittersteins und senkrecht dazu ausgerichtet sind, eine geringere Wandstärke aufweisen.

10. Gitterstein nach Anspruch 9, bei dem die Wandabschnitte (10.2, 10.4, 10.6, 10.8), die zwischen den Wandabschnitten (10.1, 10.3, 10.5, 10.7) verlaufen, die in Längsrichtung (L) des Gittersteins und senkrecht dazu ausgerichtet sind, eine um 15 bis 35% geringere Wandstärke aufweisen.

11. Gitterstein nach Anspruch 1, bei dem die Wandbereiche (10.1...10.8) auf mindestens einer ihrer Setzflächen (16, 20) mit Erhebungen (22) ausgebildet sind.

12. Gitterstein nach Anspruch 1, bei dem die Wandbereiche auf mindestens einer ihrer Setzflächen mit Vertiefungen ausgebildet sind.

13. Gitterstein nach Anspruch 11 und 12, bei dem die Vertiefungen und Erhebungen (22) zum gegenseitigen formschlüssigen Eingriff ausgebildet sind.

14. Gitterstein nach Anspruch 1, bei dem die in Längsrichtung (L) verlaufenden Wandabschnitte (10.1, 10.5) eine größere Wandstärke aufweisen als die weiteren Wandabschnitte (10.2, 10.3, 10.4, 10.6, 10.7, 10.8).

15. Gitterstein nach Anspruch 1, bei dem die in Längsrichtung (L) verlaufenden Wandabschnitte (10.1, 10.5) ein größeres Flächenmoment aufweisen als die senkrecht dazu verlaufenden Wandabschnitte (10.3, 10.7).

## Claims

1. A refractory checker block with the following characteristics:
1.1 eight wall sections (10.1to 10.8), abutting at an angle of < 90° in relation to one another;
1.2 the wall sections (10.1 to 10.8) delimit a space which is open at opposite ends;
1.3 the wall sections (10.1 to 10.8) provide an upper and lower mutual placement area (16, 20);
1.4 the length (1) of the checker block corresponds to an even multiple of its width (b), minus one wall thickness (10.1 to 10.8);
1.5 the checker block is designed so as to be symmetrical in relation to a mirror plane which divides the checker block in longitudinal direction (L).

2. The checker block according to claim 1, in which at least those wall sections (10.1, 10.5) which extend in longitudinal direction (L) comprise recesses (14).

3. The checker block according to claim 2, in which the cross-sectional area of a recess (14) is at least 15 % of the entire cross-sectional area of the associated wall section (10.1, 10.5).

4. The checker block according to claim 2, in which at least one recess (14) in longitudinal direction of the checker block is of a size which corresponds to at least 50 % of the length of the associated wall area.

5. The checker block according to claim 2, in which at least one wall section (10.1, 10.5) which extends in longitudinal direction (L) comprises several recesses (14) spaced apart from each other.

6. The checker block according to claim 1, in which at least one wall section (10.3, 10.7) which extends perpendicular to the wall sections (10.1, 10.5), which extend in longitudinal direction (L), comprises recesses (18).

7. The checker block according to claim 2, in which the cross-sectional area of the recesses (14) in the wall sections (10.1, 10.5) which extend in longitudinal direction is at least twice the size of the cross-sectional area of the recesses (18) in the wall sections (10.3, 10.7) which extend perpendicular thereto.

8. The checker block according to claim 2 or 6, in which the recesses (14, 18) are open to a placement area (16) of the checker block.

9. The checker block according to claim 1, in which the wall sections (10.2, 10.4, 10.6, 10.8), which extend between the wall sections (10.1, 10.3, 10.5, 10.7) which are aligned in longitudinal direction (L) of the checker block and perpendicular thereto, are built of a thinner wall thickness.

10. The checker block according to claim 9, in which the wall sections (10.2, 10.4, 10.6, 10.8), which extend between the wall sections (10.1, 10.3, 10.5, 10.7) which are aligned in longitudinal direction (L) of the checker block and perpendicular thereto, are built in a wall thickness that is thinner by 15 to 35 %.

11. The checker block according to claim 1, in which the wall regions (10.1...10.8) on at least one of their placement areas (16, 20) comprise elevations (22).

12. The checker block according to claim 1, in which the wall regions on at least one of their placement areas comprise indentations.

13. The checker block according to claims 11 and 12, in which the indentations and elevations (22) are formed for mutual engagement having positive fit.

14. The checker block according to claim 1, in which the wall thickness of the wall sections (10.1, 10.5) which extend in longitudinal direction (L) is greater than the wall thickness of the other wall sections (10.2, 10.3, 10.4, 10.6, 10.7, 10.8).

15. The checker block according to claim 1, in which the geometrical moment of the wall sections (10.1, 10.5) which extend in longitudinal direction (L) is larger than the geometrical moment of the wall sections (10.3, 10.7) which extend perpendicular to them.

## Revendications

1. Brique réfractaire en céramique comportant les caractéristiques suivantes :
1.1 huit parties de paroi (10.1 à 10.8), aboutées l'une à l'autre selon un angle inférieur à 90°,
1.2 les parties de paroi (10.1 à 10.8) délimitent en périphérie un espace (12) ouvert aux extrémités opposées,
1.3 les parties de paroi (10.1 à 10.8) définissent conjointement respectivement une surface de pose supérieure et inférieure (16, 20),
1.4 la brique a une longueur (1) qui correspond à un multiple entier de sa largeur (b) moins une épaisseur de paroi (10.1 à 10.8),
1. 5 la brique est conçue symétriquement par rapport à un plan de symétrie qui partage la brique dans le sens longitudinal (L).

2. Brique selon la revendication 1, dans laquelle au moins les parties de paroi (10.1, 10.5) orientées dans le sens longitudinal (L) sont conçues avec des évidements (14).

3. Brique selon la revendication 2, dans laquelle la surface de la section d'un évidement (14) correspond à au moins 15 % de la surface totale de la section de la partie de paroi (10.1, 10.5) correspondante.

4. Brique selon la revendication 2, dans laquelle au moins un évidement (14) a dans le sens longitudinal (L) de la brique une dimension qui correspond à au moins 50 % de la longueur de la partie de paroi correspondante.

5. Brique selon la revendication 2, dans laquelle au moins une partie de paroi (10.1, 10. 5) orientée dans le sens longitudinal (L) comporte plusieurs évidements (14) à distance les uns des autres.

6. Brique selon la revendication 1, dans laquelle au moins une partie de paroi (10.3, 10.7), s'étendant perpendiculairement aux parties de paroi (10.1, 10.5) orientées dans le sens longitudinal (L), est réalisée avec des évidements (18).

7. Brique selon la revendication 2, dans laquelle la surface de la section des évidements (14) dans les parties de paroi (10.1, 10. 5) orientées dans le sens longitudinal (L) est au moins égale au double de la surface de la section des évidements (18) dans les parties de paroi (10.3, 10.7) perpendiculaires à celles-ci.

8. Brique selon la revendication 2 ou 6, dans laquelle les évidements (14, 18) sont ouverts vers une surface de pose (16) de la brique.

9. Brique selon la revendication 1, dans laquelle les parties de paroi (10.2, 10.4, 10.6, 10.8), qui s'étendent entre les parties de paroi (10.1, 10.3, 10.5, 10.7) qui sont orientées dans le sens longitudinal (L) de la brique et perpendiculairement à celles-ci, ont une plus faible épaisseur de paroi.

10. Brique selon la revendication 9, dans laquelle les parties de paroi (10.2, 10.4, 10.6, 10.8), qui s'étendent entre les parties de paroi (10.1, 10.3, 10.5, 10.7) qui sont orientées dans le sens longitudinal (L) de la brique et perpendiculairement à celles-ci, ont une épaisseur de paroi de 15 à 35 % plus faible.

11. Brique selon la revendication 1, dans laquelle les parties de paroi (10.1 à 10.8) comportent des bosses (22) sur au moins une de leurs surfaces de pose (16, 20).

12. Brique selon la revendication 1, dans laquelle les parties de paroi comportent des cavités sur au moins une de leurs surfaces de pose.

13. Brique selon les revendications 11 et 12, dans laquelle les cavités et les bosses (22) sont réalisées pour entrer en prise par conjugaison de forme réciproquement.

14. Brique selon la revendication 1, dans laquelle les parties de paroi (10.1, 10.5) orientées dans le sens longitudinal (L) ont une épaisseur de paroi supérieure à celle des autres parties de paroi (10.2, 10.3, 10.4, 10.6, 10.7, 10.8).

15. Brique selon la revendication 1, dans laquelle les parties de paroi (10.1, 10.5) orientées dans le sens longitudinal (L) ont un moment de surface supérieur à celui des parties de paroi (10.3, 10.7) perpendiculaires à celles-ci.
